# EUROPÄISCHE PATENTSCHRIFT

(11) **EP 3 704 079 B1**
(45) Veröffentlichungstag und Bekanntmachung des Hinweises auf die Patenterteilung: **24.07.2024**
(21) Anmeldenummer: 18808208.5
(22) Anmeldetag: 18.10.2018
(51) Int. Cl.: C05D 1/04, C05D 3/00, C05D 5/00, C05D 9/02

(54) **GRANULATE, ENTHALTEND POLYHALIT**
POLYHALITE-CONTAINING GRANULES
GRANULÉS CONTENANT DE LA POLYHALITE

(30) Priorität: 30.10.2017 DE 102017010086
(43) Veröffentlichungstag der Anmeldung: 09.09.2020
(73) Patentinhaber: K+S Aktiengesellschaft, 34131 Kassel (DE)
(72) Erfinder: KOPF, Sebastian, 36433 Bad Salzungen (DE); DIETRICH, Armin, 37299 Weißenborn (DE); KEßLER, Alexander, 36266 Heringen (DE); BAUCKE, Guido, 36277 Schenklengsfeld OT Wippershain (DE)
(74) Vertreter: Meissner Bolte Partnerschaft mbB
(86) Internationale Anmeldenummer: PCT/DE2018/000296
(87) Internationale Veröffentlichungsnummer: WO 2019/086062

(56) Entgegenhaltungen:
- DD-A1- 249 007
- DE-A1- 102012 016 992
- DE-A1- 102013 004 597
- DE-A1- 2 810 640
- DE-B3- 102007 049 182

## Beschreibung

Die vorliegende Erfindung betrifft Granulate, insbesondere Düngemittelgranulate, die im Wesentlichen aus Kalium, Magnesium, Calcium und Sulfat in Form von Salzen und gegebenenfalls Wasser bestehen und die Polyhalit enthalten. Die Erfindung betrifft auch ein Verfahren zur Herstellung derartiger Granulate und die Verwendung der Granulate als Düngemittel.

Polyhalit ist ein Mineral aus der Klasse der Sulfate und weist folgende chemische Zusammensetzung auf: K₂Ca₂Mg[SO₄]₄·2H₂O. Polyhalit kristallisiert triklin in der Raumgruppe P1 (Raumgruppen-Nr. 2) mit den Gitterparametern *a* = 11.689 Ä; *b* = 16.332 Ä; *c* = 7,598 Ä; α = 91.65°; β = 90,0° und γ = 91,9° sowie vier Formeleinheiten pro Elementarzelle (Handbook of Mineralogy Vol. V - Polyhalite, 2003, The Mineralogical Society of America). Größere Vorkommen an Polyhalit findet man in Europa unter anderem in Österreich, Deutschland und Großbritannien sowie außerhalb Europas in den USA, China, Indien, Ukraine, Türkei und Iran.

Aufgrund der Kombination der Pflanzennährstoffe Kalium, Magnesium und Schwefel in Form des Sulfats ist Polyhalit als Mineraldünger geeignet und wirkt sich vorteilhaft auf verschiedene Qualitätskriterien und die Vitalität der damit gedüngten Kulturen aus. Zudem erlaubt sein geringer Halogengehalt den Einsatz in empfindlichen Kulturen.

Als Düngemittel wird Polyhalit vornehmlich in Form von Produkten mit Korngrößen im Bereich von 2 bis 5 mm angeboten, beispielsweise als Rollagglomerate oder als ein durch mechanisches Zerkleinern von bergmännisch abgebautem Polyhalit hergestelltes Produkt. Beim Zerkleinern des bergmännisch abgebauten Polyhalits fallen größere Mengen an feinteiligem Polyhalit an, bei dem in der Regel wenigstens 80 Gew.-%, insbesondere wenigstens 90 Gew.-% der Polyhalit-Partikel Korngrößen von maximal 2 mm, insbesondere von maximal 1,5 mm aufweisen. Dieses feinteilige Polyhalit ist als Düngemittel weniger geeignet, da es nicht zuletzt aufgrund der geringen Korngröße schwierig zu handhaben ist.

Trotz seiner grundsätzlichen Vorteile wie beispielsweise sein geringer Halogengehalt weist Polyhalit verschiedene Nachteile auf. Zum einen ist Polyhalit nicht duktil und kann daher durch eine Pressagglomeration nicht zu mechanisch stabilen Granulaten verarbeitet werden. Außerdem löst sich Polyhalit in Wasser nur sehr langsam, so dass eine Düngemittelwirkung nur verzögert eintritt. Für viele Anwendungen ist es jedoch notwendig, dass möglichst rasch düngemittelaktive Ionen wie Sulfat, Magnesium und Kalium freigesetzt werden, damit die Düngemittelwirkung rasch eintritt.

Die DE10213004597 beschreibt ein Verfahren zur Herstellung von Granulaten aus nicht duktilen, sulfatischen Salzen wie Polyhalit oder Langbeinit, bei dem man eine Mischung des feinteiligen Salzes mit einer größeren Menge eines zähflüssigen, zuckerhaltigen Abfallprodukts der Rohr- oder Rübenzuckerherstellung einer Pressgranulierung unterwirft. Hierbei wird die Mischung zunächst zu Schülpen verpresst, die man vor der Zerkleinerung zum fertigen Granulat mehrere Stunden reifen lassen muss, da die Schülpen anfänglich noch sehr weich sind. Die erreichten Festigkeiten sind nicht zufriedenstellend. Zudem erfordert das Verfahren aufgrund der Reifungsphase einen höheren apparativen Aufwand, da die Schülpen nicht direkt weiterverarbeitet werden können sondern zwischengelagert werden müssen.

US 2017/0137333 beschreibt die Herstellung von Polyhalit-Granulaten aus feinteiligem Polyhalit, bei dem man das feinteilige Polyhalit zunächst mit einem Bindemittel, vorzugsweise mit vorgequollener Stärke, vermischt und anschließend mit einem Mischer mit etwa 5 Gew.-% Wasser besprüht, um ein voragglomeriertes Produkt zu erhalten. Dieses voragglomerierte Produkt wird auf einem Pelettier-Teller unter Zusatz von weiterem Wasser zu einem Agglomerat weiterverarbeitet. Das Verfahren ist im Vergleich zu einer Pressagglomeration apparativ aufwändig. Zudem erfordert der vergleichsweise große Einsatz an Wasser einen hohen Energieaufwand für die Trocknung der Granulate.

Die US 8,551,429 beschreibt ein durch Kalzinierung von bergmännisch abgebautem Polyhalit erhaltenes Salzgemisch (kalziniertes Polyhalit). Beim Kalzinieren verliert das Polyhalit das gebundene Kristallwasser und seine Kristallstruktur verändert sich. Zudem ändert sich das Lösungsverhalten. Während sich nicht kalziniertes Polyhalit in Wasser nur langsam löst, enthält kalziniertes Polyhalit Bestandteile die sich rasch in Wasser lösen. Im Übrigen sind in kalziniertem Polyhalit die relativen Mengenanteile der Elemente K, Ca, Mg und S, letzteres in Form von Sulfat, denen des Polyhalits vergleichbar. Dementsprechend wird in US 8,551,429 kalziniertes Polyhalit zur Gewinnung von Kaliumsulfat vorgeschlagen. Bei dem Verfahren fallen größere Mengen an unlöslichen Calciumsalzen an, die entsorgt werden müssen. Außerdem ist das Verfahren aufgrund des Einsatzes großer Wassermengen aufwendig und unwirtschaftlich.

Aufgabe der vorliegenden Erfindung ist daher die Bereitstellung von Düngemittelgranulaten die sulfatische Bestandteile enthalten, die eine ausreichende mechanische Festigkeit aufweisen, und die sich in einfacher Weise, insbesondere durch ein Pressagglomerationsverfahren in einfacher und effizienter Weise herstellen lassen. Außerdem besteht Bedarf an Düngemittelgranulaten, die sulfatische Bestandteile enthalten und ein vorteilhaftes Freisetzungsprofil der als Düngemittel wirksamen Bestandteile aufweisen. Weiterhin besteht Bedarf an einer Verwertung von feinteiligem Polyhalit.

Es wurde überraschenderweise gefunden, dass diese und weitere Aufgaben durch polyhalithaltige Granulate gemäß Anspruch 1 gelöst werden, die im Wesentlichen aus Kalium, Magnesium, Calcium und Sulfat in Form von Salzen und gegebenenfalls Wasser bestehen, wenn 15 bis 80 Gew.% des Kaliums, Magnesiums, Calciums und Sulfats in Form von Polyhalit und 20 bis 85 Gew.% des Kaliums, Magnesiums, Calciums und Sulfats in Form von Sulfaten des Magnesiums, Calciums und/oder des Kaliums vorliegen, die sich bei 20°C in entionisiertem Wasser rascher lösen als Polyhalit und/oder eine höhere Löslichkeit aufweisen als Polyhalit.

Insbesondere wurde auch gefunden, dass sich feuchte, feinteilige Salzmischungen, die im wesentlichen aus einem Gemisch aus Polyhalit und wenigstens einem weiteren Salz oder einem Salzgemisch bestehen, das ausgewählt ist unter Sulfaten des Kaliums, Sulfaten des Calciums und Sulfaten Magnesiums und deren Mischungen, und das sich bei 20°C in entionisiertem Wasser rascher löst als Polyhalit und/oder eine höhere Löslichkeit aufweist als Polyhalit, durch Pressagglomeration zu mechanisch stabilen Granulaten verarbeiten lassen, insbesondere wenn man der Salzmischung vor der Pressagglomeration Wasser zusetzt. Dies überrascht, da sich Polyhalit selber auch unter Zusatz von Wasser nicht durch Pressagglomeration zu einem stabilen Granulat verarbeiten lässt. Aufgrund des Ausgangsmaterials enthält das so hergestellte Düngemittelgranulat Kalium, Magnesium, Calcium und Sulfat.

Dementsprechend betrifft die vorliegende Erfindung Granulate, die im Wesentlichen aus Kalium, Magnesium, Calcium und Sulfat in Form von Salzen bestehen, wobei ein Teil des Kaliums, Magnesiums, Calciums und Sulfats in Form von Polyhalit und die Restmengen des Kaliums, Magnesiums, Calciums und Sulfats in Form von Sulfaten des Magnesiums, des Calciums und/oder des Kaliums vorliegen, die sich bei 20°C in entionisiertem Wasser rascher lösen als Polyhalit und/oder eine höhere Löslichkeit aufweisen als Polyhalit.

Dementsprechend betrifft die vorliegende Erfindung auch ein Verfahren zur Herstellung derartiger Granulate, bei dem man eine feuchte, feinteilige Salzmischung, die im Wesentlichen aus einem Gemisch aus Polyhalit und wenigstens einem weiteren Salz oder einem Salzgemischen besteht, das ausgewählt ist unter Sulfaten des Kaliums, Sulfaten des Calciums, Sulfaten des Magnesiums und deren Gemischen, wobei sich das weitere Salz bzw. Salzgemisch bei 20°C in entionisiertem Wasser rascher löst als Polyhalit und/oder eine höhere Löslichkeit aufweist als Polyhalit, einer Pressagglomeration unterwirft.

Die erfindungsgemäßen Granulate, insbesondere die nach dem erfindungsgemäßen Verfahren erhältlichen Granulate, zeichnen sich durch gute mechanische Festigkeit, insbesondere hohe Bruchfestigkeitswerte und geringe Abriebwerte aus. Außerdem weisen die erfindungsgemäßen Granulate aufgrund ihrer Zusammensetzung einen geringen Halogengehalt auf und gewährleisten, dass ein Teil der düngemittelaktiven Bestandteile, d.h. Kalium, Magnesium und Schwefel in Form von Sulfat, direkt zur Verfügung steht, während ein weiterer Teil aufgrund des geringen Lösungsgeschwindigkeit des Polyhalits eine Langzeitwirkung gewährleistet. Zudem erlaubt es das erfindungsgemäße Verfahren, bergmännisch abgebautes Polyhalit in einfacher Weise zu Düngemittelgranulaten zu verarbeiten, ohne dass aufwändige Lösungs- bzw. Extraktionsverfahren notwendig sind.

Die erfindungsgemäßen Granulate bestehen im Wesentlichen aus Kalium, Magnesium, Calcium und Sulfat in Form von Salzen. Dies bedeutet, dass die Granulate, bezogen auf das Gesamtgewicht der von freiem Wasser, d.h. von Kristallwasser, verschiedenen Bestandteile des Granulats, zu wenigstens 80 Gew.-%, insbesondere zu wenigstens 90 Gew.-%, bezogen auf die Gesamtmasse der im Granulat enthaltenen Salze, einschließlich des in den Salzen gebundenen Kristallwassers, aus Kalium, Magnesium, Calcium und Sulfat in Form ihrer Salze, einschließlich des darin gebundenen Kristallwassers bestehen.

Die Begriffe "freies Wasser" und "ungebundenes Wasser" werden hier und im Folgenden synonym verwendet und bezeichen Wasser, das nicht als Kristallwasser gebunden ist. Letzeres wird auch als gebundenes Wasser bezeichnet.

Dementsprechend versteht man den Begriff "im wesentlichen bestehend" in Bezug auf die Salzmischungen dahingehend, dass diese zu wenigstens 80 Gew.-%, insbesondere zu wenigstens 90 Gew.-% aus einem Gemisch aus Polyhalit und wenigstens einem weiteren Salz bestehen, das ausgewählt ist unter Sulfaten des Kaliums, Sulfaten des Calciums und Sulfaten Magnesiums und deren Gemischen, die sich bei 20°C in entionisiertem Wasser rascher lösen als Polyhalit und/oder eine höhere Löslichkeit aufweisen als Polyhalit, wobei die Angaben in Gew.-% hier auf die Gesamtmasse der in der Salzmischung enthaltenen Salze, einschließlich des in den Salzen gebundenen Kristallwassers, bezogen sind.

Unter dem Begriff "feinteilig" in Bezug auf die Salzmischungen und die Inhaltstoffe der Salzmischungen, versteht man ein für die Herstellung von Granulaten übliches Kornband, bei dem typischerweise wenigstens 80 Gew.-%, insbesondere wenigstens 90 Gew.-% der Salzkörner im Pressgut eine Korngröße von maximal 2 mm, insbesondere maximal 1,5 mm und speziell maximal 1,2 mm aufweisen und vorzugsweise Korngrö-ßen im Bereich von 0,01 bis 2 mm, insbesondere im Bereich von 0,05 bis 1,5 mm, und speziell im Bereich von 0,1 bis 1,2 mm, bestimmt mittels Siebanalyse nach DIN 66165:2016-08, aufweisen. Die mittlere Korngröße (Gewichtsmittel, d₅₀-Wert) der Salzkörner des Pressguts liegt typischerweise im Bereich von 50 µm bis 1500 µm, insbesondere im Bereich von 100 µm bis 1200 µm. Der d₉₀-Wert des im erfindungsgemäßen Verfahren eingesetzten Pressguts liegt in der Regel bei maximal 2 mm, insbesondere maximal 1,5 mm und speziell maximal 1,2 mm.

Bei den hier und im Folgenden angegebenen Korngrößen handelt es sich in der Regel um diejenigen Werte, wie sie mittels Siebanalyse nach DIN 66165:2016-08 bestimmt werden. Die Ermittlung der Massenanteile der jeweiligen Korngrößen bzw. Korngrö-ßenbereiche erfolgt nach Maßgabe der DIN 66165:2016-08 durch Fraktionierung des dispersen Guts unter Verwendung von mehreren Sieben mittels maschineller Siebung in vorkalibrierten Systemen. Sofern nichts anderes angegeben ist, sind Prozentangaben im Zusammenhang mit Teilchen- bzw. Korngrößen als Angaben in Gew.-% zu verstehen. In diesem Zusammenhang bezeichnet der d₉₀-Wert diejenige Korngröße, die von 90 Gew.-% der Salzkörner unterschritten wird. Der d₁₀-Wert bezeichnet diejenige Korngröße, die von 10 Gew.-% der Salzkörner unterschritten wird. Der d₅₀-Wert bezeichnet die gewichtsmittlere Korngröße. Die Korngrößenverteilung kann auch durch Laserlichtstreuung (Laserlichtbeugung), beispielsweise nach der in ISO 13320:2009 angegebenen Methode, bestimmt werden, insbesondere im Falle sehr kleiner Partikel mit Partikelgrößen < 200 µm.

Erfindungsgemäß enthalten die Granulate Polyhalit. Der Anteil an Polyhalit ist wenigstens 15 Gew.-% und speziell 20 Gew-%, bezogen auf die Gesamtmasse der im Granulat enthaltenen Salze, einschließlich des in den Salzen gebundenen Kristallwassers. Erfindungsgemäß wird der Anteil an Polyhalit 80 Gew.-% und speziell 75 Gew.-% nicht überschreiten und liegt häufig im Bereich von 20 bis 75 Gew.-%, jeweils bezogen auf die Gesamtmasse der im Granulat enthaltenen Salze, einschließlich des in den Salzen gebundenen Kristallwassers.

Unter Polyhalit versteht man ein Mineral, das einen Gehalt an kristallinem K₂Ca₂Mg[SO₄]₄·2H₂O von in der Regel wenigstens 85 Gew.-%, insbesondere wenigstens 90 Gew.-% aufweist. Neben dem kristallinen K₂Ca₂Mg[SO₄]₄·2H₂O kann Polyhalit auch in untergeordnetem Maße andere Alkali- und Erdalkalimetallsalze, insbesondere in Form der Chloride und Sulfate, enthalten. In der Regel handelt es sich bei dem für die Kalzinierung eingesetzten Polyhalit um ein Polyhalit in der auf dem Markt üblichen Qualität. Vorzugsweise ist das für die Herstellung der Granulate eingesetzte Polyhalit ein feinteiliges Polyhalit, insbesondere ein beim Zerkleinern eines bergmännisch abgebauten Polyhalits anfallender feinteiliger Polyhalit und/oder Polyhalit-Staub. Bei dem Polyhalit kann es sich aber auch um Rückgut aus einer Herstellung eines polyhalithaltigen Granulats handeln.

Das für die Herstellung der erfindungsgemäßen Granulate verwendete Polyhalit weist ein Kornband auf, bei dem typischerweise wenigstens 80 Gew.-%, insbesondere wenigstens 90 Gew.-% der Salzkörner Polyhalits eine Korngröße von maximal 2 mm, insbesondere maximal 1,5 mm und speziell maximal 1,2 mm aufweisen und vorzugsweise Korngrößen im Bereich von 0,01 bis 2 mm, insbesondere im Bereich von 0,05 bis 1,5 mm, und speziell im Bereich von 0,1 bis 1,2 mm, bestimmt mittels Siebanalyse nach DIN 66165:2016-08, aufweisen. Die mittlere Korngröße (Gewichtsmittel, d₅₀-Wert) des Polyhalits liegt typischerweise im Bereich von 50 µm bis 1500 µm, insbesondere im Bereich von 100 µm bis 1200 µm. Der d₉₀-Wert des Polyhalits liegt in der Regel bei maximal 2 mm, insbesondere maximal 1,5 mm und speziell maximal 1,2 mm.

Typischerweise wird Polyhalit etwa folgende Zusammensetzung aufweisen:
Kalium: 11,0 bis 13,0 Gew.-%;
Magnesium: 3,4 bis 4,3 Gew.-%;
Calcium: 11,0 bis 13,5 Gew.-%;
Sulfat: 55,0 bis 64,0 Gew.-%; sowie
gegebenenfalls Natrium: < 2 Gew.-%;
gegebenenfalls Halogen, z.B. Chlorid: < 5 Gew.-%

Außerdem enthält das Polyhalit Kristallwasser, typischerweise in Mengen von 5,0 bis 7,0 Gew.-%. Der Kristallwassergehalt kann über den Glühverlust bei 550°C bestimmt werden. Die Restfeuchte des Polyhalits, bedingt durch anhaftende Feuchtigkeit wird in der Regel 0,5 Gew.-%, bezogen auf das Polyhalit, nicht überschreiten und liegt typischerweise im Bereich von 0,1 bis 0,4 Gew.-%. Der Trocknungsverlust wird typischerweise in Anlehnung an DIN EN 15935:2012 bestimmt, indem man eine Probe des Polyhalits bei Temperaturen im Bereich von 105 ± 5 °C bei Umgebungsdruck bis zur Gewichtskonstanz trocknet.

Das in den Granulaten enthaltene Polyhalit kann beispielsweise anhand seiner charakteristischen Röntgenreflexe in einem Röntgenpulverdiffraktogramm des Granulats bestimmt werden. Die charakteristischen Röntgenreflexe des Polyhalits sind in der Literatur beschrieben, z.B. in Handbook of Mineralogy Vol. V - Polyhalite, 2003, The Mineralogical Society of America, und in der Datenbank des Internationalen Zentrums für Beugungsdaten (International Centre for Diffraction Data, ICDD) unter ICDD 23-982.

Als weiteren Bestandteil enthalten die erfindungsgemäßen Granulate wenigstens ein weiteres Salz oder Salzgemisch, im Folgenden Salz B, das ausgewählt ist unter Sulfaten des Kaliums, Sulfaten des Calciums und Sulfaten des Magnesiums und Gemischen davon, wobei sich das weitere Salz bzw. Salzgemisch bei 20°C in entionisiertem Wasser rascher löst als Polyhalit selber und/oder eine bessere, d.h. höhere Löslichkeit aufweist als Polyhalit selber. In diesem Zusammenhang bedeutet der Ausdruck "rascher lösen", dass von einer Probe von 1 g des Salzes bzw. Salzgemischs bei einer gewichtsmittleren Teilchengröße von etwa 0,2-0,5 mm sich wenigstens 50 Gew.-% in 100 ml entionisiertem Wasser unter Rühren bei 20°C wenigstens 1,5 mal so rasch, insbesondere 2,0 mal so rasch auflöst wie Polyhalit mit vergleichbarer Teilchengröße unter den gleichen Versuchsbedingungen. In diesem Zusammenhang bedeutet der Ausdruck "bessere Löslichkeit" bzw. höhere "Löslichkeit", dass die Löslichkeit des Salzes bzw. Salzgemischs in entionisiertem Wasser bei 20°C wenigstens 1,2 mal so hoch, insbesondere 1,5 mal so hoch ist wie die Löslichkeit von Polyhalit. Die Löslichkeit wird bestimmt durch Herstellung gesättigter Lösungen von Proben mit einer gewichtsmittleren Teilchengröße von etwa 0,2-0,5 mm und ist in g/kg angegeben.

Der Anteil an Salz B ist im Bereich von 20 bis 85 Gew.-% und speziell im Bereich von 25 bis 80 Gew.-%, jeweils bezogen auf die Gesamtmasse der im Granulat enthaltenen Salze, einschließlich des in den Salzen gebundenen Kristallwassers. Insbesondere beträgt die Gesamtmasse an Polyhalit + Salz B wenigstens 80 Gew.-% und insbesondere wenigstens 90 Gew.-%, bezogen auf die Gesamtmasse der im Granulat enthaltenen Salze, einschließlich des in den Salzen gebundenen Kristallwassers.

Zu den geeigneten weiteren Salzen zählen Kaliumsulfat (K₂SO₄), Magnesiumsulfat, einschließlich seiner Hydrate, wie Magnesiumsulfat-Monohydrat z.B. Kieserit oder künstliches Magnesiumsulfat-Monohydrat (SMS) und Magnesiumsulfat-Heptahydrat (Epsomit bzw. Bittersalz), sowie das Mischsalz K₂Mg₂[SO₄]₃ (Langbeinit). Zu den weiteren Salzen (Salz B) zählt insbesondere auch kalziniertes Polyhalit.

Insbesondere handelt es sich bei dem weiteren Salz B um kalziniertes Polyhalit.

Unter "kalziniertem Polyhalit" versteht man ein sulfatisches Salz bzw. Salzgemisch, das durch Kalzinierung von Polyhalit erhalten wird. Das kalzinierte Polyhalit ist auf dem Markt erhältlich oder kann in an sich bekannter Weise durch Kalzinierung von Polyhalit erhalten werden. Üblicherweise erfolgt eine solche Kalzinierung bei Temperaturen von wenigstens 440°C, insbesondere wenigstens 460°C und speziell wenigstens 480°C, z.B. bei Temperaturen im Bereich von 440°C bis 560°C, insbesondere im Bereich von 460 bis 540°C und speziell im Bereich von 480 bis 520°C. Die Kalzinierung wird üblicherweise so lange durchgeführt, bis das das erhaltene Material einen Glühverlust, bestimmt durch Glühverlust bei 550°C angelehnt nach DIN EN 15935:2012 (mit dem Unterschied, dass nicht bei 105 °C getrocknet werden muss), von nicht mehr als 0,2 Gew.-%, insbesondere nicht mehr als 0,1 Gew.-% aufweist.

Die Kalzinierungsdauer hängt naturgemäß von der Feinheit des eingesetzten Polyhalits, der Temperatur und der Art der Kalzinierungsvorrichtung ab und kann vom Fachmann durch Routineversuche ermittelt werden. Üblicherweise liegt die Kalzinierungsdauer im Bereich von 1 bis 60 Minuten, speziell im Bereich von 10 bis 20 Minuten. Geeignete Vorrichtungen für die Kalzinierung sind u.a. Drehrohröfen, Wirbelschichtöfen und Muffelöfen.

Da sich das kalzinierte Polyhalit in seiner Zusammensetzung von dem zur Kalzinierung eingesetztes Polyhalit im Wesentlichen nur durch den Verlust von Kristallwasser unterscheidet, weist es dementsprechend typischerweise etwa folgende Zusammensetzung auf:
Kalium: 11,8 bis 14,0 Gew.-%;
Magnesium: 3,6 bis 4,6 Gew.-%;
Calcium: 11,5 bis 14,6 Gew.-%;
Sulfat: 59,0 bis 69,0 Gew.-%;
gegebenenfalls Natrium: < 2,5 Gew.-%;
gegebenenfalls Halogen, z.B. Chlorid: < 6 Gew.-%

Das kalzinierte Polyhalit weist in der Regel ein Kornband auf, das dem für die Kalzinierung eingesetzten Polyhalits vergleichbar ist. Dementsprechend weisen typischerweise wenigstens 80 Gew.-%, insbesondere wenigstens 90 Gew.-% der Salzkörner des kalzinierten Polyhalits eine Korngröße von maximal 2 mm, insbesondere maximal 1,5 mm und speziell maximal 1,2 mm auf und vorzugsweise Korngrößen im Bereich von 0,01 bis 2 mm, insbesondere im Bereich von 0,05 bis 1,5 mm, und speziell im Bereich von 0,1 bis 1,2 mm, bestimmt mittels Siebanalyse nach DIN 66165:2016-08. Die mittlere Korngröße (Gewichtsmittel, d₅₀-Wert) des kalzinierten Polyhalits liegt typischerweise im Bereich von 50 µm bis 1500 µm, insbesondere im Bereich von 100 µm bis 1200 µm.

Der d₉₀-Wert des kalzinierten Polyhalits liegt in der Regel bei maximal 2 mm, insbesondere maximal 1,5 mm und speziell maximal 1,2 mm.

Insbesondere besteht das Granulat im Wesentlichen, d.h. zu wenigstens 80 Gew.-% insbesondere wenigstens 90 Gew.-%, speziell wenigstens 95 Gew.-%, bezogen auf die Gesamtmasse der im Granulat enthaltenen Salze, einschließlich des in den Salzen gebundenen Kristallwassers, aus Polyhalit und kalziniertem Polyhalit. Insbesondere handelt es sich bei dem Polyhalit um ein beim Zerkleinern eines bergmännisch abgebauten Polyhalits anfallenden feinteiligen Polyhalit oder um Rückgut aus einer Herstellung eines polyhalithaltigen Granulats. Bei dem kalzinierten Polyhalit handelt es sich insbesondere um ein durch Kalzinierung eines beim Zerkleinern eines bergmännisch abgebauten Polyhalits anfallenden feinteiligen Polyhalit oder durch Kalzinierung eines Rückguts aus einer Herstellung eines polyhalithaltigen Granulats erhaltenen Produkts.

In einer weiteren Ausführungsform der Erfindung handelt es sich bei dem weiteren Salz B um ein Gemisch aus Kaliumsulfat und kalziniertem Polyhalit. Insbesondere besteht das Granulat dieser Ausführungsform im Wesentlichen, d.h. zu wenigstens 80 Gew.-% insbesondere zu wenigstens 90 Gew.-%, speziell zu wenigstens 95 Gew.-%, bezogen auf die Gesamtmasse der im Granulat enthaltenen Salze, einschließlich des in den Salzen gebundenen Kristallwassers, aus Polyhalit, kalziniertem Polyhalit und Kaliumsulfat. Vorzugsweise wird der Anteil an kalziniertem Polyhalit am Granulat wenigstens 15 Gew.-%, insbesondere wenigstens 20 Gew.-%, jeweils bezogen auf die Gesamtmasse der im Granulat enthaltenen Salze, einschließlich des in den Salzen gebundenen Kristallwassers, ausmachen. Die Gesamtmenge an kalziniertem Polyhalit und Kaliumsulfat wird vorzugsweise im Bereich von 25 bis 85 Gew.-% und speziell im Bereich von 30 bis 80 Gew.-% liegen, jeweils bezogen auf die Gesamtmasse der im Granulat enthaltenen Salze, einschließlich des in den Salzen gebundenen Kristallwassers. Die Menge an Kaliumsulfat beträgt insbesondere wenigstens 5 Gew.-%, und speziell wenigstens 10 Gew.-%, jeweils bezogen auf die Gesamtmasse der im Granulat enthaltenen Salze, einschließlich des in den Salzen gebundenen Kristallwassers.

In einer weiteren Ausführungsform der Erfindung handelt es sich bei dem weiteren Salz B um Magnesiumsulfat, einschließlich seiner Hydrate, wie Magnesiumsulfat-Monohydrat z.B. Kieserit oder künstliches Magnesiumsulfat-Monohydrat (SMS) und Magnesiumsulfat-Heptahydrat (Epsomit bzw. Bittersalz). Insbesondere besteht das Granulat dieser Ausführungsform im Wesentlichen, d.h. zu wenigstens 80 Gew.-% insbesondere wenigstens 90 Gew.-%, speziell wenigstens 95 Gew.-%, bezogen auf die Gesamtmasse der im Granulat enthaltenen Salze, einschließlich des in den Salzen gebundenen Kristallwassers, aus Polyhalit, kalziniertem Polyhalit und Magnesiumsulfat, insbesondere in Form des Monohydrats (Kieserit und/oder SMS). Vorzugsweise wird der Anteil an kalziniertem Polyhalit am Granulat wenigstens 15 Gew.-%, insbesondere wenigstens 20 Gew.-%, jeweils bezogen auf die Gesamtmasse der im Granulat enthaltenen Salze, einschließlich des in den Salzen gebundenen Kristallwassers, ausmachen. Die Gesamtmenge an kalziniertem Polyhalit und Magnesiumsulfat wird vorzugsweise im Bereich von 25 bis 85 Gew.-% und speziell im Bereich von 30 bis 80 Gew.-% liegen, jeweils bezogen auf die Gesamtmasse der im Granulat enthaltenen Salze, einschließlich des in den Salzen gebundenen Kristallwassers. Die Menge an Magnesiumsulfat beträgt insbesondere wenigstens 5 Gew.-%, und speziell wenigstens 10 Gew.-%, jeweils bezogen auf die Gesamtmasse der im Granulat enthaltenen Salze, einschließlich des in den Salzen gebundenen Kristallwassers. Gewichtsangaben in Bezug auf Magnesiumsulfat beziehen sich jeweils auf das eingesetzte Salz, d.h. bei Hydraten auf das Hydrat.

Außerdem kann das erfindungsgemäße Granulat salzartige Mikronährstoffe, wie sie häufig in Düngemitteln eingesetzt werden, enthalten. Der Anteil an salzartige Mikronährstoffen wird in der Regel 10 Gew.-%, insbesondere 5 Gew.-% und speziell 3 Gew-%, bezogen auf die Gesamtmasse der im Granulat enthaltenen Salze, einschließlich des in den Salzen gebundenen Kristallwassers, nicht überschreiten. Zu den salzartigen Mikronährstoffen zählen salzartige Borverbindungen sowie Salze und Komplexverbindungen der Elemente Mangan, Zink, Kupfer, Eisen und Molybdän. Mangan, Kupfer und Zink werden dabei vorzugsweise in Form ihrer Sulfate eingesetzt. Kupfer und Eisen werden vorzugsweise auch in Form von Chelaten, z. B. mit EDTA, eingesetzt. Bor wird vorzugsweise als Calcium-Natrium-Borat, z. B. in Form von Ulexit, Natriumborat, Kaliumborat oder Borsäure eingesetzt. Molybdän wird vorzugsweise als Natrium- oder Ammoniummolybdat oder als Mischung davon eingesetzt. Typischerweise wird der Anteil an von Bor verschiedenen Mikronährstoffen, gerechnet in ihrer elementaren Form, 1 Gew.-%, bezogen auf die Gesamtmasse der im Granulat enthaltenen Salze, einschließlich des in den Salzen gebundenen Kristallwassers, nicht überschreiten. Der Gehalt an Bor, gerechnet als B₂O₃ wird in der Regel 3 Gew.-% nicht überschreiten und liegt typischerweise, sofern enthalten, im Bereich von 0,01 bis 3 Gew.-%, insbesondere 0,01 bis 2 Gew.-%, bezogen auf die Gesamtmasse der im Granulat enthaltenen Salze, einschließlich des in den Salzen gebundenen Kristallwassers.

Weiterhin kann das Granulat etwaige Verunreinigungen enthalten, die im eingesetzten, Polyhalit und den weiteren Salzen B enthalten sind. Hierzu zählen vor allem Halogenide des Natriums, des Kaliums, des Magnesiums und des Calciums, weiterhin Oxide des Calciums und des Magnesiusm wie MgO, MgCOs, und schwerlösliches Calciumsulfat, z.B. in Form von Gips. Der Anteil der über Verunreinigungen eingeführten Salze wird in der Regel 20 Gew.-%, insbesondere 10 Gew.-%, bezogen auf die Gesamtmasse der im Granulat enthaltenen Salze, einschließlich des in den Salzen gebundenen Kristallwassers, nicht überschreiten.

Weiterhin kann das Granulat auch organische Bindemittel enthalten, beispielsweise Tylose, Melasse, Gelatine, Stärke, Ligninsulfonate oder Salze von Polycarbonsäuren wie Natriumcitrat oder Kaliumcitrat oder Fettsäuresalze wie Calciumstearat. Der Anteil der organischen Bindemittel wird typischerweise 2 Gew.-% nicht überschreiten und beträgt vorzugsweise weniger als 1 Gew.-%, jeweils bezogen auf die Gesamtmasse der im Granulat enthaltenen Salze, einschließlich des in den Salzen gebundenen Kristallwassers.

Aufgrund ihrer Bestandteile bestehen die erfindungsgemäßen Granulate im wesentlichen aus Kalium, Magnesium, Calcium und Sulfat. Insbesondere enthalten die Granulate Kalium, Magnesium, Calcium und Sulfat in den folgendenen Mengenanteilen in Gew.-%, bezogen auf die Gesamtmasse des Granulats:
- Kalium in einer Menge von 10,0 bis 15,0 Gew.-%, insbesondere 10,8 bis 12,2 Gew.-%;
- Magnesium in einer Menge von 3,0 bis 5,0 Gew.-%, insbesondere 3,5 bis 4,5 Gew.-%
- Calcium in einer Menge von 10,0 bis 15,0 Gew.-%, insbesondere 11,9 bis 13,6 Gew.-% und
- Sulfat in einer Menge von 50,0 bis 70,0 Gew.-%, insbesondere 55,0 bis 62,1 Gew.-%.

Für die Verwendung in Düngemitteln ist es von Vorteil, wenn weniger als 10 Gew.-% der Granulatpartikeln, im Folgenden Granalien, des erfindungsgemäßen Granulats eine Korngröße unterhalb 2 mm aufweisen. Häufig weisen wenigstens 60 Gew.-%, insbesondere wenigstens 80 Gew.-% und speziell wenigstens 90 Gew.-% der Granalien eine Korngröße von nicht mehr als 5 mm auf. Vorzugsweise liegt die Korngröße der Granalien zu wenigstens 60 Gew.-%, insbesondere zu wenigstens 80 Gew.-% und speziell zu wenigstens 90 Gew.-% im Bereich von 2 bis 5 mm. Vorzugsweise weisen die erfindungsgemäßen Granulate einen geringen Anteil von Partikeln mit einer Partikelgröße bzw. Korngröße unterhalb 1 mm auf. Insbesondere beträgt der Anteil an Granalien mit einer Korngröße unterhalb 1 mm weniger als 10 Gew.-%, insbesondere weniger als 5 Gew.-%. Die Verteilung der Korngrößen der Granalien des erfindungsemäßen Granulats kann in an sich bekannter Weise durch Siebanalyse nach Maßgabe der DIN 66165:2016-08 durch Fraktionierung des Granulats unter Verwendung von mehreren Sieben mittels maschineller Siebung in vorkalibrierten Systemen bestimmt werden. Die Größenangaben beziehen sich auf den Durchmesser der Granalien.

Die Herstellung der erfindungsgemäßen Granulate umfasst eine Pressagglomeration einer feuchten Salzmischung. Erfindungsgemäß besteht die Salzumischung im wesentlichen, d.h. zu wenigstens 80 Gew.-%, insbesondere zu wenigstens 85 Gew.-% und speziell zu wenigstens 90 Gew.-% oder zu wenigstens 95 Gew.-% aus einem Gemisch aus Polyhalit und dem wenigstens einen weiteren Salz B. Die hier und im Folgenden, in Bezug auf die Zusammensetzung Salzmischung angegebenen Angaben in Gew.-% beziehen sich auf die die Gesamtmasse der in der Salzmischung enthaltenen Salze, einschließlich des in den Salzen gebundenen Kristallwassers.

Insbesondere umfasst die in der Pressagglomeration eingesetzte Salzmischung neben Polyhalit auch kalziniertes Polyhalit. Hierbei kann das kalzinierte Polyhalit alleiniges Salz B sein. Ebenfalls bevorzugt ist es, wenn das Salz B neben dem kalzinierten Polyhalit ein weiteres Salz B umfasst, das unter Magnesiumsulfat, seinen Hydraten und Kaliumsulfat ausgewählt ist.

Insbesondere besteht die Salzmischung zu wenigstens 80 Gew.-% und bevorzugt wenigsten 90 Gew.-% oder zu wenigstens 95 Gew.-% Mischungen aus Polyhalit mit wenigstens einem weiteren Salz B, das unter Kaliumsulfat, Magnesiumsulfat und dessen Hydraten wie das Monohydrat (Kieserit) oder das Heptahydrat (Bittersalz bzw. Epsomit), Langbeinit, d.h. K₂Mg₂[SO₄]₃, und kalziniertem Polyhalit und deren Mischungen ausgewählt ist. Besonders bevorzugt besteht die Salzmischung zu wenigstens 80 Gew.-% und bevorzugt wenigsten 90 Gew.-% oder zu wenigstens 95 Gew.-% aus Mischungen aus Polyhalit und kalziniertem Polyhalit oder aus Polyhalit, kalziniertem Polyhalit und einem weiteren Salz B, das unter Magnesiumsulfat, seinen Hydraten und Kaliumsulfat ausgewählt ist. Speziell besteht die Salzmischung zu wenigstens 80 Gew.-% und bevorzugt wenigsten 90 Gew.-% oder zu wenigstens 95 Gew.-% aus Mischungen aus Polyhalit und kalziniertem Polyhalit.

Der Anteil an Polyhalit an der Salzmischung liegt bei 15 bis 80 Gew.% und speziell im Bereich von 20 bis 80 Gew.-%, jeweils bezogen auf die Gesamtmasse der in der Salzmischung enthaltenen Salze, einschließlich des in den Salzen gebundenen Kristallwassers. Der Anteil der Salze B beträgt dementsprechend 20 bis 85 Gew.-% und speziell im Bereich von 20 bis 80 Gew.-%, jeweils bezogen auf die Gesamtmasse der in der Salzmischung enthaltenen Salze, einschließlich des in den Salzen gebundenen Kristallwassers. Neben den vorgenannten Bestandteilen kann die Salzmischung Mikronährstoffe oder weitere Salze in den oben angegebenen Mengen enthalten.

Erfindungsgemäß wird man eine feuchte Salzmischung der Pressagglomeration unterwerfen. Hierdurch wird die gewünschte Festigkeit der Granulate erreicht und der Abrieb verringert. Hierbei kann man so vorgehen, dass man das Wasser unmittelbar vor der Aufgabe der Salzmischung auf die zur Pressagglomeration eingesetzte Vorrichtung, im Folgenden Presse, zugibt. Häufig wird man jedoch Salzmischung zunächst durch Zusatz von Wasser befeuchten und dann aus der feuchten Salzmischung durch Pressagglomeration die Granulate herstellen.

Die Menge an zugesetztem Wasser beträgt in der Regel 0,1 bis 4 Gew.-%, insbesondere 0,2 bis 3,5 Gew.-% und speziell 0,5 bis 3 Gew.-% Wasser, bezogen auf die Gesamtmasse der in der Salzmischung enthaltenen Salze, einschließlich des darin gebundenen Kristallwassers. Gegebenenfalls wird man bei der Zugabe des Wassers etwaige Restfeuchten der Salzmischung, die auch als Trockenverlust bezeichnet werden, berücksichtigen, so dass die angegebenen Obergrenzen für die zugesetzte Wassermenge von 4 Gew.-%, bzw. 3,5 Gew.-% oder 3 Gew.-%, bezogen auf die Gesamtmasse der in der Salzmischung enthaltenen Salze, einschließlich des darin gebundenen Kristallwassers nicht überschreiten und die Obergrenzen das nicht gebundene Wasser (Trockenverlust) mit umfassen. Mit anderen Worten die Gesamtmenge an zugesetztem Wasser und Restfeuchte wird in der Regel 4 Gew.-%, bzw. 3,5 Gew.-% oder 3 Gew.-% bezogen auf die Gesamtmasse der in der Salzmischung enthaltenen Salze, einschließlich des darin gebundenen Kristallwassers, nicht überschreiten.

Die Bereitstellung der feuchten Salzmischung erfolgt in an sich bekannter Weise durch Vermischen der Bestandteile der Salzmischung mit Wasser in den gewünschten Mengenanteilen in hierfür geeigneten Vorrichtungen. Geeignete Vorrichtungen für das Vermengen der Komponenten der Salzmischung und des Wassers sind Fallmischer mit und ohne Einbauten wie Trommelmischer und Ringmischer, Schaufelmischer wie Trogmischer, Pflugschaufelmischer und Doppelwellenmischer sowie Schneckenmischer. Hierbei kann man auch so vorgehen, dass man das Polyhalit mit dem bzw. den weiteren Bestandteil(en) vermischt und dann das Gemisch mit Wasser befeuchtet.

Der Zusatz des Wassers zur Salzmischung kann unmittelbar vor der Pressagglomeration, z.B. unmittelbar vor der Aufgabe der Salzmischung auf die Presse erfolgen. Häufig wird man jedoch das Wasser mit der Salzmischung vermischen und die feuchte Salzmischung der Pressagglomeration zuführen. Das Wasser kann der Salzmischung zugegeben werden, die bereits alle für die Pressagglomeration benötigten Komponenten enthält. Man kann aber auch die Zugabe des Wassers und das Vermischen der Salze kombinieren, beispielsweise indem man das Wasser während des Vermischens der Salze zusetzt oder das Wasser in Form einer Lösung eines der festen Bestandteile, z.B. eines Mikronährstoffs oder eines Bindemittels, zusetzt. Der Zusatz des Wassers kann in an sich bekannter Weise, z.B. durch Aufsprühen auf die festen Bestandteile des Pressguts in hierfür geeigneten Vorrichtungen, z.B. in einer der oben genannten Mischvorrichtungen erfolgen.

Für die Pressagglomeration ist es von Vorteil, wenn die Bestandteile der Salzmischung ein Kornband aufweisen, bei dem wenigstens 80 Gew.-%, insbesondere wenigstens 90 Gew.-% der Salzkörner in der Salzmischung eine Korngröße von maximal 2 mm, insbesondere maximal 1,5 mm und speziell maximal 1,2 mm auf und vorzugsweise Korngrößen im Bereich von 0,01 bis 2 mm, insbesondere im Bereich von 0,05 bis 1,5 mm, und speziell im Bereich von 0,1 bis 1,2 mm, bestimmt mittels Siebanalyse nach DIN 66165:2016-08 aufweisen. Die mittlere Korngröße (Gewichtsmittel, d₅₀-Wert) der Bestandteile der Salzmischung liegt typischerweise im Bereich von 50 µm bis 1500 µm, insbesondere im Bereich von 100 µm bis 1200 µm. Der d₉₀-Wert der Salzkörner der Salzmischung liegt in der Regel bei maximal 2 mm, insbesondere maximal 1,5 mm und speziell maximal 1,2 mm.

Die eigentliche Durchführung der Pressagglomeration kann in Analogie zu den aus dem Stand der Technik bekannten Agglomerationsverfahren erfolgen, die beispielsweise in Wolfgang Pietsch, Agglomeration Processes, Wiley - VCH, 1. Auflage, 2002, in G. Heinze, Handbuch der Agglomerationstechnik, Wiley - VCH, 2000 sowie in Perry's Chemical Engineers' Handbook, 7. Auflage, McGraw-Hill, 1997, beschrieben sind. Hier und im Folgenden werden die Begriffe Pressagglomeration und Pressgranulierung synonym verwendet.

Bei der Pressagglomeration wird die feuchte Salzmischung unter Anwendung von Druck kompaktiert bzw. verpresst. Je nach Art des Kompaktierens/Verpressens werden hierbei die feinteiligen Bestandteile der feuchten Salzmischung zu grobstückigen Agglomeraten oder bandartigen bzw. plattenartigen Strängen agglomeriert. Anschließend erfolgt üblicherweise eine Zerkleinerung des beim Kompaktieren erhaltenen, grobteiligen Materials. Zum Kompaktieren eignen sich grundsätzlich alle die für ähnliche Zwecke bekannten Pressen, wie beispielsweise Stempel-, Strang-, Loch- und Walzenpressen.

Vorzugsweise erfolgt die Kompaktierung unter Verwendung einer Walzenpresse. Bei Walzenpressen erfolgt die Kompaktierung im Spalt zweier gegenläufig rotierender Walzen. Die Walzenoberflächen können glatt, profiliert, z. B. geriffelt, gewellt oder gewaffelt, oder mit Formmulden ausgestattet sein. Eine etwaige Profilierung der Walzenoberfläche dient vor allem der Verbesserung des Einzugsverhältnisses in den Walzenspalt. Häufig wird man Walzenpressen mit glatter oder profilierter Walzenoberfläche einsetzen. In diesem Falle ist das primäre Agglomerationsprodukt ein aus dem Walzenspalt austretender bandartiger bzw. plattenartiger Strang, der auch als Schülpe bezeichnet wird.

Die für die Kompaktierung erforderlichen Presskräfte, die üblicherweise auf die Walzenbreite bezogen und als Linienkräfte angegeben werden, liegen in der Regel im Bereich von 1 bis 75 kN/cm, insbesondere im Bereich von 20 bis 70 kN/cm und bezogen auf 1000 mm Durchmesser und einer mittleren Schülpendicke von 10 mm. In der Regel wird die Walzenpresse bei einer Walzenumfangsgeschwindigkeit im Bereich von 0,2 bis 1,6 m/s betrieben. Üblicherweise erfolgt die Kompaktierung bei Temperaturen im Bereich von 20 bis 100 °C oder bei der Temperatur, die sich aufgrund der Einwirkung der mechanischen Kräfte auf die feuchte Salzmischung einstellt. Gegebenenfalls wird man die der Granulierung zugeführte feuchte Salzmischung auf die für die Kompaktierung gewünschte Temperatur vorwärmen bzw. hat noch Restwärme z. B. aus der Trocknung. Gegebenenfalls kann die Kompaktierung mehrstufig durchgeführt werden.

Das bei der Kompaktierung erhaltene Material wird man in der Regel zur Einstellung der Partikelgröße des herzustellenden Granulates einer Zerkleinerung unterwerfen. Die Zerkleinerung kann in an sich bekannter Weise, beispielsweise durch Vermahlen in hierfür geeigneten Vorrichtungen erfolgen, beispielsweise in Prallbrechern, Prallmühlen oder Walzenbrechern.

In der Regel schließt sich dem eigentlichen Granuliervorgang, d.h. der Kompaktierung und Zerkleinerung, eine Klassierung des Granulates an. Hierbei erfolgt eine Auftrennung des Granulates in Granulate mit der spezifikationsgerechten Korngröße, kleineren Granulaten (Feinanteil bzw. Unterkorn) und gegebenenfalls gröberen Granulaten (Grobanteil bzw. Überkorn). Spezifikationsgerecht ist insbesondere ein Granulat, in dem wenigstens 90 Gew.-% der Granulatpartikel eine Partikelgröße beziehungsweise einen Partikeldurchmesser im Bereich von 2 bis 5 mm aufweisen. Die Klassierung kann nach üblichen Verfahren erfolgen, insbesondere durch Sieben.

Das bei der Klassierung anfallende, nicht spezifikationsgerechte Granulat-Material, das sogenannte Rückgut, wird in der Regel in den Prozess zurückgeführt. Das Unterkorn kann direkt in den Prozess zurückgeführt werden. Das Überkorn wird in der Regel vor der Rückführung auf eine für die Pressagglomeration geeignete Partikelgröße vermahlen oder einer anderen Anwendung zugeführt.

Das so erhaltene spezifikationsgerechte Granulat kann in an sich bekannter Weise konfektioniert, z. B. verpackt und transportiert werden.

In einer bevorzugten Ausführungsform der Erfindung wird man das bei der Pressagglomeration anfallende Granulat vor der Konfektionierung einer Nachbehandlung mit Wasser unterwerfen. Sofern das Granulat klassiert wird, kann die Nachbehandlung sowohl vor als auch nach der Klassierung durchgeführt werden. Sofern die Pressagglomeration eine Zerkleinerungsstufe umfasst, erfolgt die Nachbehandlung in der Regel nach der Zerkleinerung und vor oder im Anschluss an eine etwaige Klassierung.

Für die Nachbehandlung wird man das Granulat mit einer geringen Wassermenge befeuchten. Die Wassermenge wird in der Regel so gewählt, dass sie vom Granulat vollständig adsorbiert wird. Vorzugsweise wird man zur Nachbehandlung das Wasser in einer Menge von 0,1 bis 4,0 Gew.-%, insbesondere 0,2 bis 3,0 Gew.-%, und speziell 0,5 bis 2,5 Gew.-%, bezogen auf die Masse des fertigen, unbehandelten Granulats einsetzen. Häufig wird man die Wassermenge für die Nachbehandlung so wählen, dass die Gesamtmenge an freiem bzw. ungebundenem Wasser im behandelten Granulat, d.h. Wasser, das nicht als Kristallwasser gebunden vorliegt, im Bereich von 0,2 bis 8 Gew.-%, insbesondere 0,4 bis 6 Gew.-% und speziell 0,6 bis 5 Gew.-%, bezogen auf die Gesamtmasse des frisch hergestellten Granulats liegt.

Für die Nachbehandlung wird man in der Regel so vorgehen, dass man das Wasser möglichst gleichmäßig, insbesondere in fein verteilter Form, z.B. durch Aufsprühen bzw. in zerstäubter Form, auf das fertige Granulat aufbringt. Hierzu wird man üblicherweise das Wasser mittels ein oder mehrerer geeigneter Zerstäuber, z.B. feststehende oder rotierende Düsen, versprühen bzw. zerstäuben. Hierbei hat es sich als vorteilhaft erwiesen, wenn das Granulat während des Aufbringens des Wassers, insbesondere des zerstäubten Wassers, bewegt wird, um einen gleichmäßigeren Auftrag des Wassers auf die Oberfläche der Granulat-Partikel zu erzielen. Insbesondere wird man so vorgehen, dass man das Granulat in einer Relativbewegung durch einen Sprühkegel oder einen Sprühvorhang aus mehreren sich überlagernden Sprühkegeln führt. Beispielsweise kann man zum Aufbringen des Wassers so vorgehen, dass man das Granulat mittels eines Transportbands durch einen Bereich führt, in dem Wasser versprüht bzw. zerstäubt wird, beispielsweise indem man einen oder mehrere Sprühkegel oder einen oder mehrere Sprühvorhänge auf dem sich bewegenden Transportband erzeugt.

Auch kann man beispielsweise am Übergabepunkt zwischen zwei Transportbändern einen Bereich, in dem Wasser versprüht bzw. zerstäubt wird, erzeugen. Hierdurch wird ein besonders gleichmäßiges Aufbringen des Wassers auf die Oberfläche der Granulat-Partikel erreicht. Grundsätzlich ist es auch möglich, das Wasser in Mischvorrichtungen, beispielsweise Fallmischer mit und ohne Einbauten wie Trommelmischer und Ringmischer, Schaufelmischer wie Trogmischer, Pflugschaufelmischer und Doppelwellenmischer, auf die Oberfläche der Granulat-Partikel aufzubringen. Vorzugsweise wird man beim Aufbringen des Wassers die mechanische Beanspruchung des Granulats möglichst gering halten.

Das für die Nachbehandlung des Granulats verwendete Wasser kann grundsätzlich reines, z.B. entionisiertes Wasser, aber auch Leitungswasser oder Prozesswasser sein.

Gegebenenfalls kann sich der Nachbehandlung ein Trocknungsschritt anschließen, beispielsweise, indem man einen Gasstrom, z.B. Frischluft, durch das Granulat leitet oder durch Wärmezufuhr oder durch eine Kombination dieser Maßnahmen.

Die erfindungsgemäßen Granulate zeichnen sich durch eine für Düngemittelgranulate ausreichende Festigkeit und damit durch eine geringere Empfindlichkeit gegenüber mechanischer Belastung aus, wie sie beispielsweise beim Ein- oder Ausspeichern oder beim Umschlagen oder Transportieren der Granulate auftreten. Dies äußert sich in einer geringeren Kornzerstörung und einer geringeren Staubbildung durch Abrieb, d.h. von Partikeln mit Korngrößen unterhalb 1 mm. Daher neigen erfindungsgemäß erhaltene Granulate bei der Lagerung, insbesondere unter Druck, wie er in Haufwerken oder bei der Lagerung in Silos auftritt, in geringerem Ausmaß zum Verbacken. Überraschenderweise bleibt die verbesserte mechanische Festigkeit der Granulate auch bei Lagerung über längere Zeiträume erhalten, so dass die beim Ausspeichern bzw. beim Umschlag auftretenden mechanischen Belastungen bei den erfindungsgemäß erhaltenen Granulaten auch nach längerer Lagerung zu einer geringeren Kornzerstörung führen.

Die erfindungsgemäßen Granulate sind daher nicht nur aufgrund ihrer Bestandteile, insbesondere aufgrund der gleichzeitigen Anwesenheit von Kalium, Magnesium und Sulfat und dem geringen Anteil an Halogen sondern auch aufgrund ihrer mechanischen Festigkeit als Düngemittel geeignet. Dementsprechend können die erfindungsgemäß erhältlichen Granulate insbesondere in den für Kalium-haltige und Sulfat-haltige Düngemittel üblichen Düngemittelanwendungen eingesetzt werden. Aufgrund ihrer speziellen Zusammensetzung werden die aktiven Bestandteile K, Mg und Sulfat sowohl direkt als auch verzögert freigesetzt.

Somit ist es möglich, durch Wahl des Mengenverhältnisses von Polyhalit zu dem weiteren Sulfat die Freisetzungscharakteristik der düngemittelaktiven Bestandteile des Granulats zu steuern und gezielt einzustellen. Mit anderen Worten, ein hoher Anteil an Salz B führt im Vergleich zu Granulaten aus Polyhalit zu einer rascheren Freisetzung der düngemittelaktiven Bestandteile. Anders als Düngemittelgranulate aus Polyhalit eignen sich die erfindungsgemäßen Granulate als Dünger mit rascher Direktwirkung. Die folgenden Beispiele dienen der Erläuterung der Erfindung.

Abkürzungen:
BF: Bruchfestigkeit/Berstfeste
Bsp.: Beispiel
Calc. Poly: kalziniertes Polyhalit
GT: Gewichtsteile
n.b.: nicht bestimmt
Poly: Polyhalit
TV: Trockenverlust

Die Bestimmung der Korngrößenverteilung erfolgte auf einer analytischen Vibrationssiebmaschine (Typ Retsch AS 200 control).

Der Trockenverlust TV wurde in Anlehnung an DIN EN 12880:2000 bestimmt, indem man eine Probe von etwa 30 g in einem Trockenschrank bei Temperaturen im Bereich von 105 ± 5 °C bei Umgebungsdruck 2 h trocknete und das Gewicht der Probe vor und nach der Trocknung bestimmte.

Der Glühverlust wurde in Anlehnung an die DIN EN 15935:2012 bestimmt (mit dem Unterschied, dass zuvor nicht bei 105 °C getrocknet wurde), indem man eine Probe von etwa 2000 g in einem Muffelofen bei Temperaturen im Bereich von 550 ± 25 °C bei Umgebungsdruck 2 h glühte und das Gewicht der Probe vor und nach dem Glühen bestimmte.

Die Berstfeste bzw. Bruchfestigkeit wurde mit Hilfe des Tabletten-Bruchfestigkeitstesters Typ TBH 425D der Firma ERWEKA auf Basis von Messungen an 56 Einzelgranalien unterschiedlicher Partikelgröße (Fraktion 2,5 - 3,15 mm) ermittelt und der Mittelwert berechnet. Bestimmt wurde die Kraft, die erforderlich war, um die Granalie zwischen Stempel und Platte des Bruchfestigkeitstesters zu zerbrechen. Granalien mit einer Berstfeste > 400 N und solche mit einer Berstfeste < 10 N wurden bei der Mittelwertbildung nicht berücksichtigt.

Die Werte für den Abrieb wurden mit dem Rolltrommelverfahren nach Busch bestimmt. Hierzu wurden 50 g des Granulats mit einer Korngrößenfraktion von 2,5 - 3,15 mm zusammen mit 70 Stahlkugeln (Durchmesser 10 mm, 283 g) in eine Rolltrommel eines handelsüblichen Abriebtesters, z. B. ERWEKA, Typ TAR 20, gegeben und 10 min bei 40 U*min⁻¹ gedreht. Anschließend wurde der Inhalt der Trommel auf ein Sieb mit einer Maschenweite von 5 mm, unter dem ein Sieb mit einer Maschenweite von 0,5 mm angeordnet war, 1 min auf einer Siebmaschine (Typ Retsch AS 200 control) gesiebt. Der abgesiebte Feinanteil entspricht dem Abrieb.

Es wurden die folgenden Einsatzstoffe verwendet:
Polyhalit (Poly):

| | |
|---|---|
| Gehalt Kalium: | 11,4 Gew.-% |
| Gehalt Magnesium: | 4,1 Gew.-% |
| Gehalt Calcium: | 12,6 Gew.-% |
| Gehalt Sulfat: | 59,6 Gew.-% |
| Gehalt Chlorid: | 3,1 Gew.-% |
| Gehalt Natrium: | 1,9 Gew.-% |

Trocknungsverlust bei 105°C: < 0,3 Gew.-%.
Glühverlust bei 550°C: 6,7 Gew.-%.
Das Polyhalit wies folgende Korngrößenverteilung auf:
d₁₀: 8,3 µm, d₅₀: 475,4 µm, d₉₀: 836,5 µm.
Kalziniertes Polyhalit (calc. Poly):

| | |
|---|---|
| Gehalt Kalium: | 12,1 Gew.-% |
| Gehalt Magnesium: | 4,3 Gew.-% |
| Gehalt Calcium: | 13,7 Gew.-% |
| Gehalt Sulfat: | 62,2 Gew.-% |
| Gehalt Chlorid (berechnet): | 3,3 Gew.-% |
| Gehalt Natrium: | 2,3 Gew.-% |

Das Polyhalit wies folgende Korngrößenverteilung auf:
d₁₀: 32,2 µm, d₅₀: 499,9 µm, d₉₀: 1026 µm.

### Herstellung der Granulate:

Für die Pressagglomeration wurde eine Laborpresse der Fa. Bepex, Typ L200/50 eingesetzt, die zwei gegenläufig rotierende Walzen mit stäbchenförmigen Vertiefungen auf der Walzenoberfläche aufwies (Walzendurchmesser 200 mm, Arbeitsbreite 50 mm). Die Laborpresse wurde mit einer spezifischen Presskraft von 28 kN/cm und einer Walzendrehzahl von 6,2 U/min betrieben. Die Zufuhr der Salzmischung erfolgte mittels einer über den Presswalzen angeordneten Stopfschnecke. Die Aufgaberate an Salzmischung betrug etwa 0,5 bis 2 kg/min.

Die Zerkleinerung der beim Kompaktieren mittels der Laborpresse anfallenden Schülpen erfolgte mit einer Prallmühle der Fa. Hazemag. Die Prallmühle wies 2 Prallwerke auf und hatte einen Rotordurchmesser von 300 mm. Die Spaltweite für das vordere Prallwerk wurde auf 10 mm und für das hintere Prallwerk auf 5 mm eingestellt. Die Prallmühle wurde mit einer Umfangsgeschwindigkeit des Rotors von 15 m/s betrieben. Die Zerkleinerung erfolgte unmittelbar im Anschluss an die Herstellung der Schülpen. Der Durchsatz an Schülpen lag bei etwa 0,5 bis 2 kg/s.

Anschließend wurde das Material mit einer handelsüblichen Siebvorrichtung klassiert, die Fraktion mit Korngröße 2 - 5 mm (Produkt) abgetrennt. Die Fraktion mit Korngröße < 2 mm kann zur Aufgabe zurückgeführt werden (Feingut). Der Anteil mit Korngröße > 5 mm (Grobgut) kann aufgemahlen und ebenfalls zurückgeführt werden. Für die Bestimmung der Bruchfestigkeit bzw. Berstfeste der Granulate wurde eine Testfraktion (Testgranulat) mit einer Korngröße von 2,5 - 3,15 mm ausgesiebt.

### Beispiele 1 bis 4 (wobei Beispiel 4 nicht gemäß der Erfindung ist) und Vergleichsbeispiele V1 und V2:

Kalziniertes Polyhalit wurde zusammen mit Polyhalit und mit den in Tabelle 1 angegebenen Gewichtsteilen an Wasser, bezogen auf 100 Gewichtsteile kalziniertes Polyhalit, in einen Intensivmischer gegeben und 1 min gemischt. Die Mischung wurde dann mit einer Aufgaberate von 0,5 bis 2 kg/min auf die Laborpresse gegeben und unmittelbar anschließend zerkleinert und klassiert.

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 1 zusammengestellt.

**Tabelle 1: Verpressen ohne/mit Wasser und ohne Nachbehandlung**

| | | | Wasser | Abrieb | BF | Abrieb | BF | Abrieb | BF |
|---|---|---|---|---|---|---|---|---|---|
| Bsp. | calc. Poly | Poly | | 1 d | | 7 d | | 14 d | |
| V1 | 100 | 0 | 0 GT | *) | *) | *) | *) | *) | *) |
| 1 | 75 | 25 | 2 GT | 14,0% | 36 N | 11,0% | 42 N | 9,0% | 49 N |
| 2 | 50 | 50 | 2 GT | 17,0% | 31 N | 12,0% | 37 N | 13,0% | 37 N |
| 3 | 25 | 75 | 2 GT | 16,0% | 25 N | 18,0% | 33 N | 18,0% | 30 N |
| 4 | 10 | 90 | 1 GT | 70,0% | 18 N | 70,0% | 18 N | 55,0% | 18 N |
| V2 | 0 | 100 | 1 GT | 80,0% | 17 N | n.b. | 17 N | 61,0 % | n.b. |

| | | | | | | | | | |
|---|---|---|---|---|---|---|---|---|---|
| GT: Gewichtsteile, bezogen auf 100 Gewichtsteile der Salzmischung *) keine Schülpenbildung, d.h. ist nicht kompaktierbar | | | | | | | | | |

### Beispiele 5 bis 8 (wobei Beispiel 8 nicht gemäß der Erfindung ist):

Ein Gemisch aus Polyhalit und kalziniertem Polyhalit wurde in den in Tabelle 2 angegebenen Mengenanteilen nach der für die Beispiele 1 bis 4 angegebenen Vorschrift zu einem Granulat verarbeitet, mit dem Unterschied, dass man vor dem Klassieren das zerkleinerte Produkt in einem Mischbehälter unter manueller Durchmischung mit 2 Gewichtsteilen Wasser je 100 Gewichtsteile Granulat vermischte (Nachbehandlung).

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 2 zusammengestellt.

**Tabelle 2: Verpressen mit Wasser mit Nachbehandlung (2 Gew.-% H₂O)**

| | | | Wasser | Abrieb | BF | Abrieb | BF | Abrieb | BF |
|---|---|---|---|---|---|---|---|---|---|
| Bsp. | calc. Poly | Poly | | 1 d | | 7 d | | 14 d | |
| 5 | 75 | 25 | 2 GT | 2,4% | 50 N | 2,4% | 52 N | 2,8% | 61 N |
| 6 | 50 | 50 | 2 GT | 4,0% | 44 N | 3,6% | 47 N | 5,0% | 48 N |
| 7 | 25 | 75 | 2 GT | 4,2% | 39 N | 5% | 45 N | 4,6% | 44 N |
| 8 | 10 | 90 | 1 GT | 10,0% | 23 N | 19% | 28 N | n. b. | 30 N |

| | | | | | | | | | |
|---|---|---|---|---|---|---|---|---|---|
| GT (Gew%): Gewichtsteile, bezogen auf 100 Gewichtsteile der Salzmischung | | | | | | | | | |

### Beispiel 9:

Ein Gemisch aus Polyhalit und kalziniertem Polyhalit wurde in der Tabelle 3 angegebenen Mengenanteilen zusammen mit Borax nach der für die Beispiel 3 angegebenen Vorschrift mit Wasser zu einem Granulat verarbeitet. Die Menge an Borax wurde so gewählt, dass der Gehalt an elementarem Bor 0,5 Gew.-%, bezogen auf die Gesamtmenge an Polyhalit und kalziniertem Polyhalit (Beispiel 9), betrug.

Anschließend wurde das erhaltene Granulat unter Umgebungsbedingungen gelagert und nach 1 Tag, 7 Tagen bzw. 14 Tagen Bruchfestigkeit und Abrieb bestimmt. Die Ergebnisse sind in Tabelle 3 zusammengestellt.

**Tabelle 3: Verpressen mit Wasser ohne Nachbehandlung**

| | | | Wasser | Abrieb | BF | Abrieb | BF | Abrieb | BF |
|---|---|---|---|---|---|---|---|---|---|
| Bsp. | calc. Poly | Poly | | 1 d | | 7 d | | 14 d | |
| 9 | 25 | 75 | 2 GT | 13,0 % | 25 N | 19,0% | 27 N | 22 % | 29 N |

## Patentansprüche

1. Granulat, bestehend im Wesentlichen aus Kalium, Magnesium, Calcium und Sulfat in Form von Salzen, wobei ein Teil des Kaliums, Magnesiums, Calciums und Sulfats in Form von Polyhalit und die Restmengen des Kaliums, Calciums, Magnesiums und Sulfats in Form von Sulfaten des Kaliums, des Calciums und/oder des Magnesiums vorliegen, die sich bei 20°C in entionisiertem Wasser rascher lösen und/oder eine bessere Löslichkeit aufweisen als Polyhalit,
wobei der Anteil an Polyhalit im Bereich von 15 bis 80 Gew.-%, bezogen auf die Gesamtmasse der im Granulat enthaltenen Salze liegt und der Anteil an Sulfaten des Kaliums, des Calciums und/oder des Magnesiums im Bereich von 20 bis 85 Gew.-%, bezogen auf die Gesamtmasse der im Granulat enthaltenen Salze liegt.

2. Granulat nach Anspruch 1, wobei der Anteil an Polyhalit 20 bis 80 Gew.-%, bezogen auf die Gesamtmasse der im Granulat enthaltenen Salze beträgt.

3. Granulat nach einem der vorhergehenden Ansprüche, das im Wesentlichen aus einem Gemisch aus Polyhalit und kalziniertem Polyhalit besteht.

4. Granulat nach einem der Ansprüche 1 oder 2, das im Wesentlichen aus einem Gemisch aus Polyhalit, Kaliumsulfat und kalziniertem Polyhalit besteht.

5. Granulat nach einem der Ansprüche 1 oder 2, das im Wesentlichen aus einem Gemisch aus Polyhalit, Magnesiumsulfat oder einem Hydrat des Magnesiumsulfats und kalziniertem Polyhalit besteht.

6. Granulat nach einem der vorhergehenden Ansprüche, enthaltend Kalium, Magnesium, Calcium und Sulfat in den folgendenen Mengenanteilen in Gew.-%, bezogen auf die Gesamtmasse des Granulats:
- Kalium in einer Menge von 10,0 bis 15,0 Gew.-%, insbesondere 10.8 bis 12,2 Gew.-%;
- Magnesium in einer Menge von 3,0 bis 5,0 Gew.-%, insbesondere 3,5 bis 4,5 Gew.-%
- Calcium in einer Menge von 10,0 bis 15,0 Gew.-%, insbesondere 11.9 bis 13,6 Gew.-% und
- Sulfat in einer Menge von 50,0 bis 70,0 Gew.-%, insbesondere 55,0 bis 62,1 Gew.-%.

7. Granulat nach einem der vorhergehenden Ansprüche, wobei wenigstens 80 Gew.-% der Granulatpartikel einen Durchmesser im Bereich von 2 bis 5 mm aufweisen.

8. Granulat nach einem der vorhergehenden Ansprüche, erhältlich durch ein Verfahren, umfassend eine Pressagglomeration einer feuchten, feinteiligen Salzmischung, die im Wesentlichen aus einem Gemisch aus Polyhalit und wenigstens einem weiteren Salz oder einem Salzgemischen besteht, das ausgewählt ist unter Sulfaten des Kaliums, Sulfaten des Calciums, Sulfaten des Magnesiums und deren Gemischen, wobei sich das weitere Salz bzw. Salzgemisch bei 20°C in entionisiertem Wasser rascher löst und/oder eine bessere Löslichkeit aufweist als Polyhalit,
wobei der Anteil an Polyhalit im Bereich von 15 bis 80 Gew.-%, bezogen auf die Gesamtmasse der in der Salzmischung enthaltenen Salze liegt und der Anteil an Sulfaten des Kaliums, des Calciums und/oder des Magnesiums im Bereich von 20 bis 85 Gew.-%, bezogen auf die Gesamtmasse der in der Salzmischung enthaltenen Salze liegt.

9. Granulat nach Anspruch 8, wobei das weitere Salz kalziniertes Polyhalit umfasst.

10. Verfahren zur Herstellung von Kalium, Magnesium, Calcium und Sulfat enthaltenden Granulaten, umfassend eine Pressagglomeration einer feuchten, feinteiligen Salzmischung, die im Wesentlichen aus einem Gemisch aus Polyhalit und wenigstens einem weiteren Salz oder einem Salzgemisch besteht, das ausgewählt ist unter Sulfaten des Kaliums, Sulfaten des Calciums, Sulfaten des Magnesiums und deren Gemischen, wobei sich das weitere Salz bzw. Salzgemisch bei 20°C in entionisiertem Wasser rascher löst und/oder eine bessere Löslichkeit aufweist als Polyhalit, wobei der Anteil an Polyhalit im Bereich von 15 bis 80 Gew.-%, bezogen auf die Gesamtmasse der in der Salzmischung enthaltenen Salze liegt und der Anteil an Sulfaten des Kaliums, des Calciums und/oder des Magnesiums im Bereich von 20 bis 85 Gew.-%, bezogen auf die Gesamtmasse der in der Salzmischung enthaltenen Salze liegt.

11. Verfahren nach nach Anspruch 10, wobei man der Salzmischung vor der Agglomeration 0,1 bis 4 Gew.-% Wasser, bezogen auf das Gesamtgewicht der von ungebundenem Wasser verschiedenen Bestandteile der Salzzusammensetzung, zusetzt und wobei man insbesondere die Salzmischung mit dem Wasser gleichmäßig befeuchtet und dann das befeuchtete Gut einer Pressagglomeration zuführt.

12. Verfahren nach einem der Ansprüche 10 oder 11, das eines der folgenden Merkmale a) - d) aufweist:
a) das weitere Salz umfasst kalziniertes Polyhalit;
b) das Polyhalit ist ein beim Zerkleinern eines bergmännisch abgebauten Polyhalits anfallendes feinteiliges Polyhalit;
c) wenigstens 80 Gew.-% der Partikel der Salzmischung weisen eine Teilchengröße von maximal 2 mm, insbesondere im Bereich von 0,05 bis 1,5 mm auf;
d) die Herstellung des Granulats (i) umfasst ein Verpressen der Salzmischung mittels einer Walzenpresse, (ii) gefolgt von einer Zerkleinerung der dabei anfallenden Schülpen und (iii) eine Klassierung des beim Zerkleinern anfallenden Granulats.

13. Verfahren nach einem der Ansprüche 10 bis 12, wobei sich der Pressagglom tion eine Nachbehandlung des frisch hergestellten Granulats mit Wasser anschließt.

14. Verfahren nach Anspruch 13, wobei die für die Nachbehandlung verwendete Wassermenge im Bereich von 0,1 bis 4 Gew.-%, bezogen auf die Gesamtmasse des frisch hergestellten Granulats liegt und/oder wobei die für die Behandlung verwendete Wassermenge so gewählt wird, dass die Gesamtmenge an freiem Wasser im behandelten Granulat im Bereich von 0,2 bis 8 Gew.-%, bezogen auf die Gesamtmasse des frisch hergestellten Granulats liegt.

15. Verwendung von Granulaten nach einem der Ansprüche 1 bis 9 als Düngemittel.

## Claims

1. Granules consisting substantially of potassium, magnesium, calcium and sulfate in the form of salts, a part of the potassium, magnesium, calcium and sulfate being present in the form of polyhalite, and the remainders of the potassium, calcium, magnesium and sulfate being present in the form of sulfates of potassium, calcium and/or magnesium which at 20°C in deionized water dissolve more rapidly and/or have a better solubility than polyhalite,
wherein the fraction of polyhalite is in the range from 15% to 80% by weight, based on the total mass of the salts contained in the granules, and the fraction of sulfates of potassium, calcium and/or magnesium is in the range from 20% to 85% by weight, based on the total mass of the salts contained in the granules.

2. Granules according to Claim 1, wherein the fraction of polyhalite is 20% to 80% by weight, based on the total mass of the salts contained in the granules.

3. Granules according to either of the preceding claims, consisting substantially of a mixture of polyhalite and calcined polyhalite.

4. Granules according to either of Claims 1 and 2, consisting substantially of a mixture of polyhalite, potassium sulfate and calcined polyhalite.

5. Granules according to either of Claims 1 and 2, consisting substantially of a mixture of polyhalite, magnesium sulfate or a hydrate of magnesium sulfate, and calcined polyhalite.

6. Granules according to any of the preceding claims, containing potassium, magnesium, calcium and sulfate in the following proportions in % by weight, based on the total mass of the granules:
- potassium in an amount of 10.0% to 15.0% by weight, more particularly 10.8% to 12.2% by weight;
- magnesium in an amount of 3.0% to 5.0% by weight, more particularly 3.5% to 4.5% by weight;
- calcium in an amount of 10.0% to 15.0% by weight, more particularly 11.9% to 13.6% by weight; and
- sulfate in an amount of 50.0% to 70.0% by weight, more particularly 55.0% to 62.1% by weight.

7. Granules according to any of the preceding claims, wherein at least 80% by weight of the granule particles have a diameter in the range from 2 to 5 mm.

8. Granules according to any of the preceding claims, obtainable by a process comprising press agglomeration of a moist, finely divided salt mixture which consists substantially of a mixture of polyhalite and at least one further salt or salt mixture selected from sulfates of potassium, sulfates of calcium, sulfates of magnesium and mixtures thereof, where the further salt or salt mixture at 20°C in deionized water dissolves more rapidly and/or has a better solubility than polyhalite,
wherein the fraction of polyhalite is in the range from 15% to 80% by weight, based on the total mass of the salts contained in the salt mixture, and the fraction of sulfates of potassium, calcium and/or magnesium is in the range from 20% to 85% by weight, based on the total mass of the salts contained in the salt mixture.

9. Granules according to Claim 8, wherein the further salt comprises calcined polyhalite.

10. Process for preparing granules containing potassium, magnesium, calcium and sulfate, comprising press agglomeration of a moist, finely divided salt mixture which consists substantially of a mixture of polyhalite and at least one further salt or salt mixture selected from sulfates of potassium, sulfates of calcium, sulfates of magnesium and mixtures thereof, where the further salt or salt mixture at 20°C in deionized water dissolves more rapidly and/or has a better solubility than polyhalite, wherein the fraction of polyhalite is in the range from 15% to 80% by weight, based on the total mass of the salts contained in the salt mixture, and the fraction of sulfates of potassium, calcium and/or magnesium is in the range from 20% to 85% by weight, based on the total mass of the salts contained in the salt mixture.

11. Process according to Claim 10, wherein 0.1% to 4% by weight of water, based on the total weight of the constituents of the salt composition other than unbound water, is added to the salt mixture before the agglomeration, and wherein in particular the salt mixture is uniformly wetted with the water and then the wetted material is supplied to a press agglomeration.

12. Process according to either of Claims 10 and 11, having one of the following features a) - d):
a) the further salt comprises calcined polyhalite;
b) the polyhalite is a finely divided polyhalite obtained on comminution of a mined polyhalite;
c) at least 80% by weight of the particles of the salt mixture have a particle size of not more than 2 mm, more particularly in the range from 0.05 to 1.5 mm;
d) the preparation of the granules (i) comprises pressing of the salt mixture by means of a roll press, (ii) followed by comminution of the resultant flakes and (iii) classification of the granules obtained on comminution.

13. Process according to any of Claims 10 to 12, wherein the press agglomeration is followed by aftertreatment of the freshly prepared granules with water.

14. Process according to Claim 13, wherein the amount of water used for the aftertreatment is in the range from 0.1% to 4% by weight, based on the total mass of the freshly prepared granules, and/or wherein the amount of water used for the treatment is selected such that the total amount of free water in the treated granules is in the range from 0.2% to 8% by weight, based on the total mass of the freshly prepared granules.

15. Use of granules according to any of Claims 1 to 9 as fertilizer.

## Revendications

1. Produit granulé, consistant essentiellement en potassium, magnésium, calcium et sulfate sous forme de sels, une partie du potassium, du magnésium, du calcium et du sulfate se trouvant sous forme de polyhalite et les quantités restantes du potassium, du calcium, du magnésium et du sulfate se trouvant sous forme de sulfates du potassium, du calcium et/ou du magnésium, qui se dissolvent plus rapidement à 20 °C dans de l'eau désionisée et/ou présentent une meilleure solubilité que la polyhalite,
la proportion de polyhalite se situant dans la plage de 15 à 80 % en poids, par rapport à la masse totale des sels contenus dans le produit granulé et la proportion de sulfates du potassium, du calcium et/ou du magnésium se situant dans la plage de 20 à 85 % en poids, par rapport à la masse totale des sels contenus dans le produit granulé.

2. Produit granulé selon la revendication 1, dans lequel la proportion de polyhalite vaut 20 à 80 % en poids, par rapport à la masse totale des sels contenus dans le produit granulé.

3. Produit granulé selon l'une quelconque des revendications précédentes, qui consiste essentiellement en un mélange de polyhalite et polyhalite calcinée.

4. Produit granulé selon l'une quelconque des revendications 1 et 2, qui consiste essentiellement en un mélange de polyhalite, sulfate de potassium et polyhalite calcinée.

5. Produit granulé selon l'une quelconque des revendications 1 et 2, qui consiste essentiellement en un mélange de polyhalite, sulfate de magnésium ou un hydrate du sulfate de magnésium et polyhalite calcinée.

6. Produit granulé selon l'une quelconque des revendications précédentes, contenant du potassium, du magnésium, du calcium et du sulfate en les proportions suivantes en % en poids, par rapport à la masse totale du produit granulé :
- potassium en une quantité de 10,0 à 15,0 % en poids, en particulier 10,8 à 12,2 % en poids ;
- magnésium en une quantité de 3,0 à 5,0 % en poids, en particulier 3,5 à 4,5 % en poids ;
- calcium en une quantité de 10,0 à 15,0 % en poids, en particulier 11,9 à 13,6 % en poids et
- sulfate en une quantité de 50,0 à 70,0 % en poids, en particulier 55,0 à 62,1 % en poids.

7. Produit granulé selon l'une quelconque des revendications précédentes, dans lequel au moins 80 % en poids des particules de produit granulé présentent un diamètre de 2 à 5 mm.

8. Produit granulé selon l'une quelconque des revendications précédentes, pouvant être obtenu par un procédé comprenant une agglomération par compression d'un mélange de sels finement particulaire, humide, qui consiste essentiellement en un mélange de polyhalite et d'au moins un sel supplémentaire ou un mélange de sels qui est choisi parmi les sulfates du potassium, les sulfates du calcium, les sulfates du magnésium et des mélanges de ceux-ci, le sel supplémentaire ou mélange de sels se dissolvant plus rapidement à 20 °C dans de l'eau désionisée et/ou présentant une meilleure solubilité que la polyhalite,
la proportion de polyhalite se situant dans la plage de 15 à 80 % en poids, par rapport à la masse totale des sels contenus dans le mélange de sels et la proportion de sulfates du potassium, du calcium et/ou du magnésium se situant dans la plage de 20 à 85 % en poids, par rapport à la masse totale des sels contenus dans le mélange de sels.

9. Produit granulé selon la revendication 8, dans lequel le sel supplémentaire comprend de la polyhalite calcinée.

10. Procédé pour la production de granulés contenant du potassium, du magnésium, du calcium et du sulfate, comprenant une agglomération par compression d'un mélange de sels finement particulaire, humide, qui consiste essentiellement en un mélange de polyhalite et d'au moins un sel supplémentaire ou un mélange de sels, qui est choisi parmi les sulfates du potassium, les sulfates du calcium, les sulfates du magnésium et des mélanges de ceux-ci, le sel supplémentaire ou mélange de sels se dissolvant plus rapidement à 20 °C dans de l'eau désionisée et/ou présentant une meilleure solubilité que la polyhalite, la proportion de polyhalite se situant dans la plage de 15 à 80 % en poids, par rapport à la masse totale des sels contenus dans le mélange de sels et la proportion de sulfates du potassium, du calcium et/ou du magnésium se situant dans la plage de 20 à 85 % en poids, par rapport à la masse totale des sels contenus dans le mélange de sels.

11. Procédé selon la revendication 10, dans lequel on ajoute au mélange de sels avant l'agglomération 0,1 à 4 % en poids d'eau, par rapport au poids total des constituants, différents de l'eau non liée, de la composition de sels et dans lequel en particulier on humecte uniformément avec l'eau le mélange de sels et ensuite on envoie le produit humecté à une agglomération par compression.

12. Procédé selon l'une quelconque des revendications 10 et 11, qui présente l'une des caractéristiques a) - d) suivantes :
a) le sel supplémentaire comprend de la polyhalite calcinée ;
b) la polyhalite est une polyhalite finement particulaire produite lors de la fragmentation d'une polyhalite obtenu par extraction minière ;
c) au moins 80 % en poids des particules du mélange de sels présentent une taille de particule d'au maximum 2 mm, en particulier dans la plage de 0,05 à 1,5 mm ;
d) la préparation du produit granulé (i) comprend une compression du mélange de sels au moyen d'une presse à cylindres, (ii) suivie d'une fragmentation des plaquettes ainsi produites et (iii) une classification du produit granulé obtenu lors de la fragmentation.

13. Procédé selon l'une quelconque des revendications 10 à 12, dans lequel à l'agglomération par compression fait suite un post-traitement par de l'eau du produit granulé fraîchement préparé.

14. Procédé selon la revendication 13, dans lequel la quantité d'eau utilisée pour le post-traitement se situe dans la plage de 0,1 à 4 % en poids, par rapport à la masse totale du produit granulé fraîchement préparé et/ou dans lequel la quantité d'eau utilisée pour le traitement est choisie de telle façon que la quantité totale d'eau libre dans le produit granulé traité se situe dans la plage de 0,2 à 8 % en poids, par rapport à la masse totale du produit granulé fraîchement préparé.

15. Utilisation des granulés selon l'une quelconque des revendications 1 à 9 en tant qu'engrais.
